# EUROPEAN PATENT APPLICATION

(11) **EP 1 420 580 A1**
(43) Date of publication of application: **19.05.2004**
(21) Application number: 02090382.9
(22) Date of filing: 18.11.2002
(51) Int. Cl.: H04N 5/445

(54) **Method and apparatus for coding/decoding items of subtitling data**

(71) Applicant: Deutsche Thomson-Brandt GmbH, 78048 Villingen-Schwenningen (DE)
(72) Inventor: Schiller, Harald, 30539 Hannover (DE); Adolph, Dirk, 309520 Ronnenberg (DE); Horentrup, Jobst, 30161 Hannover (DE); Ostermann, Ralf, 30167 Hannover (DE); Peters, Hartmut, 30890 Barsinghausen (DE)
(74) Representative: Hartnack, Wolfgang, Dipl.-Ing.

(57) **Abstract**

Subtitling can be based on either pixel data or on character data. Character data allow very efficient encoding, but from character strings alone, subtitling can not be converted into a graphical representation to be overlaid over video. The intended character set, font and e.g. font size, must either be coded explicitly within the subtitling bitstream or an implicit assumption must be made about them. In pixel-based subtitling, subtitling frames are conveyed directly in the form of graphical representations by describing them as (typically rectangular) regions of pixel values on the AV screen, at the cost of considerably increased bandwidth for the subtitling data. According to the invention, a font memory is used that allows an efficient realisation of pixel-based subtitle lettering, because the glyphs need only be transmitted once and thereafter are referenced by relatively compact character references during the AV event. Thereby the invention combines the advantages of pure pixel-based and pure-character-based subtitling schemes, while mostly avoiding their respective shortcomings.

## Description

The invention relates to a method and to an apparatus for coding/decoding items of subtitling data, in particular subtitling and graphics for Blu-ray disc optical storage and recording.

### Background

In the area of subtitling for pre-recorded Audio-Visual (AV) material, conflicting requirements exist: On one hand, subtitling data should be efficiently encoded, especially if a whole bouquet of subtitling services is to be provided for any given AV material. In this case, at least on average, very few bits are available per subtitling character.
On the other hand, professional content owners want to have full control over the appearance of subtitling characters on screen, additionally they want to have at their command a rich set of special display effects from simple fading all through to genuine animations. Such high degree of design freedom and command normally is feasible only with high or very high subtitling bandwidth.

Two main approaches exist in today's state of the art for subtitling pre-recorded AV data signals with separate subtitling information: Subtitling can be based on either pixel data or on character data. In both cases, subtitling schemes comprise a general framework, which for instance deals with the synchronisation of subtitling elements along the AV time axis.
In the character-based subtitling approach, e.g. in the TELETEXT system *(see ETSI: ETS 300 706 Enhanced Teletext specification, May 1997)* for European analog or digital TV, strings are described by sequences of letter codes, e.g.

ASCII *(see ISO*/*IEC 8859: American Standard Code for Information Interchange - ASCII)* or UNICODE *(see ISO*/*IEC 10646: Information technology -- Universal Multiple-Octet Coded Character Set (UCS)),* which intrinsically allows for a very efficient encoding. But from character strings alone, subtitling can not be converted into a graphical representation to be overlaid over video. For this, the intended character set, font and some font parameters, most notably the font size, must either be coded explicitly within the subtitling bitstream or an implicit assumption must be made about them within a suitably defined subtitling context. Also, any subtitling in this approach is confined to what can be expressed with the letters and symbols of the specific font or fonts in use.
The DVB Subtitling specification *(see ETSI: ETS 300 743 Digital Video Broadcasting (DVB); Subtitling systems, Sep 1997, and EP-A-0* 745 *307: Van der Meer et al, Subtitling transmission system),* with its object types of 'basic object, character' or 'composite object, string of character', constitutes another state-of-the-art example of character-based subtitling.

In the pixel-based subtitling approach, subtitling frames are conveyed directly in the form of graphical representations by describing them as (typically rectangular) regions of pixel values on the AV screen. Whenever and wherever anything is meant to be visible in the subtitling plane superimposed onto video, its pixel values must be encoded and provided in the subtitling bitstream, together with appropriate synchronisation info. Obviously removing any limitations inherent with 3rd party defined fonts, the pixel-based approach carries the penalty of a considerably increased bandwidth for the proper subtitling data. Examples of pixel-based subtitling schemes can be found in DVD's 'Sub-picture' concept *(see DVD Forum: DVD Specifications for Read-Only Disc* / *Part* 3 *Video Specifications* / *Version 1.0* August 1996) as well as in the 'bitmap object' concept of DVB Subtitling *(see ETS 300 743 and EP-A-0* 745 *307 mentioned* above).

### Invention

A problem to be solved by the invention is to combine the efficient encoding of character-based subtitling with full control over the appearance of subtitling characters as is feasible with pixel-based subtitling, without significantly increasing the data amount required for transferring the necessary information. This problem is solved by the methods disclosed in claims 1 and 7. An apparatus that utilises the method of claim 1 is disclosed in claim 4.

The invention is based on a pixel-based subtitling scheme. This subtitling system includes several components which allow to include font support into an otherwise pixel-based subtitling scheme. This font support includes:
a.1) A structure for Font Describing Data for efficiently describing a set of font characters in pixel data form;
a.2) A structure for Font Identification Data to uniquely identify a predefined font to be used;
a.3) A concept of having a font memory as a part of the overall memory area, wherein that font memory is dedicated to hold the font characters, and is not directly visible in the AV output;
a.4) A structure for Character Referencing Data for efficiently referencing individual font characters from amongst the font or fonts stored in the font memory.

Font Describing Data as well as Character Referencing Data are transmitted or stored alongside AV data, whereby that transmission or storage has either the format of a nearly inseparable mix or uses completely separate transmission channels or storage locations, or is a mix of both.
At decoder side the Font Describing Data cause a set of arbitrary character glyphs (graphical representation of a character) or other graphics building blocks to be loaded into the font memory. The number and design of character glyphs to be used in each individual case is completely under the control of the content provider.

According to the invention, the Font Describing Data consist of one or more character parameter parts each comprising character parameter sets of one ore more characters in the font and one or more character pixel data parts each comprising the pixel data of one or more characters in the font. The pixel data of a character are represented as a character array, i.e. as a rectangular array of pixel values, the array having a width and a height specific to the character. Each one of said character parameter sets includes any combination of:
c.1) The width of the character array;
c.2) The height of the character array;
c.3) The start address of the pixel data of the character relative to the character pixel data part containing it; c.4) A horizontal offset between the boundaries of the array and a character reference point;
c.5) A vertical offset between the boundaries and the character reference point;
c.6) A horizontal increment describing the horizontal distance between the character and those characters to either precede or succeed it.

The inventive use of a font memory provides an efficient realisation of pixel-based subtitle lettering, because the glyphs need only be transmitted once and thereafter are referenced by relatively compact character references during the AV event.
On the other hand, because glyphs are effectively provided in pixel-based form, the appearance of subtitling is entirely put under content provider's control, and all problems of font identification, font selection, font parametrisation and character rendering, which normally come with character-based schemes, are avoided advantageously.

In this way, the invention actually combines the advantages of pure pixel-based and pure-character-based subtitling schemes, while mostly avoiding their respective shortcomings.

In principle, the inventive method is suited for decoding items of subtitling data, including the steps:
- retrieving items of Character Referencing Data that are related to corresponding parts of a video or audio-visual data signal, which data items describe sequences of characters as well as information about where in pictures of said data signal and/or when and/or how to make the referenced characters visible using a display memory;
- deriving from said items of Character Referencing Data items of Character Selecting Information and Character Positioning Information;
- reading pixel data of said referenced characters as designated by said items of Character Selection Information from a font memory;
- writing said pixel data into said display memory as designated by said items of Character Positioning Information.

In principle the inventive apparatus is suited for decoding items of subtitling data, said apparatus including:
- means for retrieving items of Character Referencing Data that are related to corresponding parts of a video or audio-visual data signal, which data items describe sequences of characters as well as information about where in pictures of said data signal and/or when and/or how to make the referenced characters visible using a display memory;
- means for:
   deriving from said items of Character Referencing Data items of Character Selecting Information and Character Positioning Information;
   reading pixel data of said referenced characters as designated by said items of Character Selection Information from a font memory;
   writing said pixel data into said display memory as designated by said items of Character Positioning Information.

Advantageous additional embodiments of the invention are disclosed in the respective dependent claims.

### Drawings

Exemplary embodiments of the invention are described with reference to the accompanying drawings, which show in:
- Fig. 1: Inventive data structure;
- Fig. 2: Block diagram of the inventive subtitling system;
- Fig. 3: Example data structure for embedding a 'font_id' into a DVD-ST 'object_data_segment'.

### Exemplary embodiments

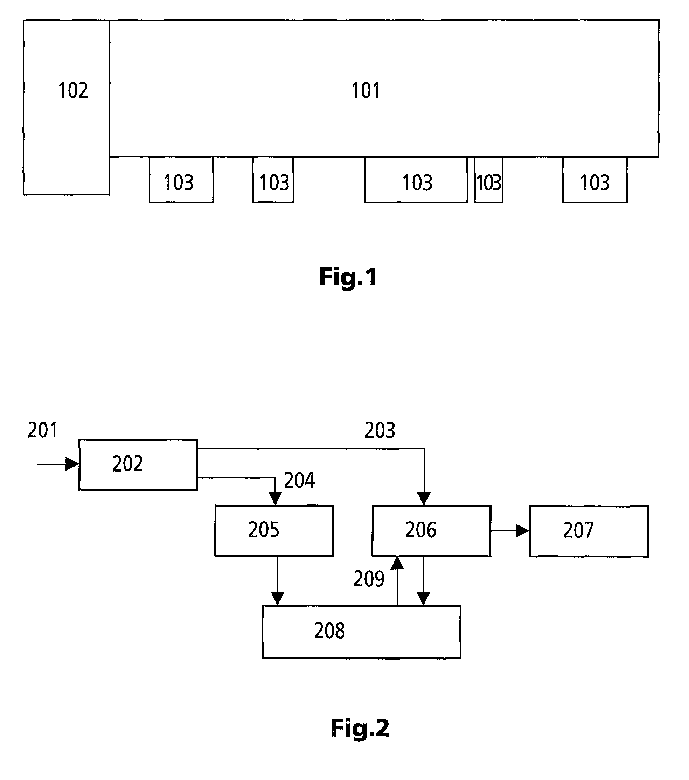

As illustrated in Fig. 1, the Font Describing Data 102 as well as the Character Referencing Data 103 are transferred, stored or recorded together with related AV data 101, whereby the transmission or storage can be anything between a nearly inseparable mix and the use of completely separate transmission channels or storage locations.
At decoder side, as shown in Fig. 2, a subtitling stream 201 passes through data separation means 202, which in turn provides Character Referencing Data 203 and Font Describing Data 204. By passing a font describing data processing means 205, the Font Describing Data 204 cause a set of arbitrary character glyphs or other graphics building blocks to be loaded into a font memory 208.
Advantageously, the number and design of character glyphs to be used in each individual use case is completely under content provider's control.
Optionally, to a font thus described and loaded into font memory 208, the above-mentioned Font Identification Data can be associated.
The Character Referencing Data 203 cause character referencing data processing means 206 to copy individual subsets of the set of character glyphs denoted Character Describing Data 209 from font memory 208 into a display memory 207, which can be a part of the overall system memory. The content of display memory 207 gets overlaid onto video and hence becomes a visible subtitle.

Optionally, the Character Referencing Data can contain references to the Font Identification Data, thus allowing a subtitling decoder to decide whether a font required for rendering a specific subtitling stream must still be loaded into font memory 208, or is already available for immediate use.

Possible uses and modes of operation of the proposed subtitling system can include, but are not limited to, one of:
b.1) Pre-loading at least one font for use throughout a long AV program;
b.2) Use of fonts containing more than one variant for at least one of the letters, the use of which includes, but is not limited to, subpixel-accurate letter positioning or emphasis (bold/italic) support;
b.3) Loading font subsets for parts of AV material (e.g. movie chapters) in cases where sparse subsets of big fonts are used, like e.g. Asian fonts.

For the further structure of the Font Describing Data, several variants of specific embodiment are proposed as follows.
In a first variant, if the font is a proportional font where individual characters have variable width, all the character arrays are horizontally padded to be nominally of equal width, and the resulting padded character arrays are vertically concatenated into a font array. The font array is then line-scanned in conventional way to form a single character pixel data part.
In another variant, all character arrays are vertically padded to be nominally of equal height, and the resulting padded character arrays are horizontally concatenated into a font array. The font array is then line-scanned in conventional way into a single character pixel data part.
For both above variants, the single character pixel data part is preceded by a single character parameter part comprising the character parameter sets of all characters in the font.
In another variant, the Font Describing Data are generated by alternately concatenating the character parameter sets and the character arrays, for all characters in the font.

In another variant, the Font Describing Data are generated by first concatenating all the character parameter sets into a single character parameter part, and appending to that part a single character pixel data part comprising all the character arrays.
In another variant, which may optionally extend all above variants, a UNICODE *(see ISO*/*IEC 10646: Information technology -- Universal Multiple-Octet Coded Character Set (UCS))* code is associated to some or all of the characters of the font, and the UNICODE code is inserted and included at an identifiable position within that part of the Font Describing Data which is associated with the character in question.

In another variant, which may optionally extend all above variants, a non-repetitive character identifier is associated to every character of the font, and the identifier is inserted and included at an identifiable position within that part of the Font Describing Data which is associated with the character in question.

In all above variants, the Font Describing Data can either be
d.1) directly transmitted using one codeword per data item, or they can be
d.2) compressed by runlength coding, or they can be
d.3) compressed by other methods for lossless compression such as the 'zlib' method used in PNG *(see W3C recommendation, PNG (Portable Network Graphics) Specification, Version 1.0, 1996, http:*//*www.w3.org*/*TR*/*REC-png.pdf).*

For the structure of the Font Identification Data, several variants of specific embodiment are proposed as follows. In a first variant, the Font Identification Data structure is embodied as a 'font_id' as defined in the 'Portable Font Resource' (PFR) system *(see Bitstream Inc.: TrueDoc PFR Specification, http:*//*www.bitstream.com*/*pfrspec*/*index.html).*

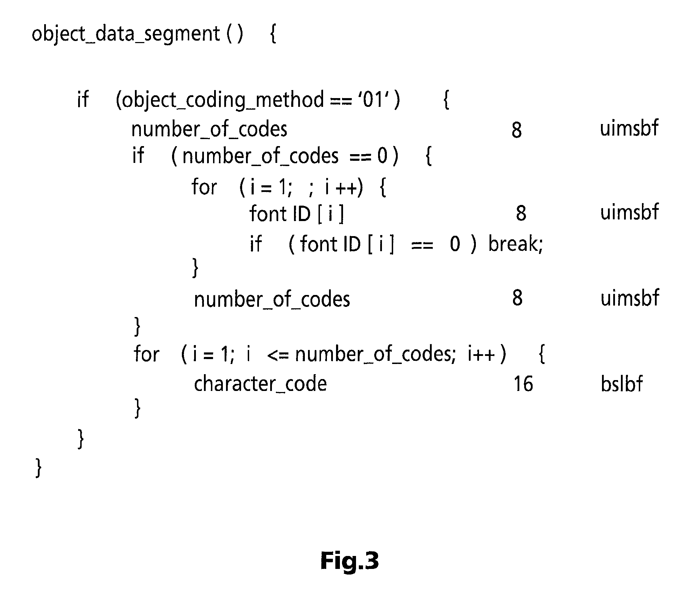

In another variant, the Font Identification Data structure in the form of a PFR 'font_id' is embodied into the above-mentioned DVB subtitling system, using a data structure as illustrated in Fig. 3.
In another variant, the Font Identification Data structure is embodied as a "Universally Unique Identifier" as defined in (UUID in: ISO/IEC 11578:1996, Information technology - Open Systems Interconnection - Remote Procedure Call (RPC)).

In the context of the invention, the Character Referencing Data consist of a sequence of one or more character reference groups each accompanied by group positioning data, and each character reference group consists of a sequence of one or more character references each accompanied by character positioning data.

The group positioning data can preferably be embodied as one of:
e.1) Absolute horizontal and vertical coordinates of a group reference point relative to the origin of the video image;
e.2) Relative horizontal and vertical coordinates of the group reference point relative to the group reference point of the previous character reference group;
e.3) Relative horizontal and vertical coordinates relative to any other prescribed reference point.

The character references can preferably be embodied as one of:
f.1) Character indexes referring to the implicit position of the designated character within the Font Describing Data; f.2) Any kind of unambiguous character identifiers;
f.3) ASCII codes if they have been unambiguously assigned to the characters;
f.4) UNICODE codes if they have been unambiguously assigned to the characters.

The character positioning data can preferably be embodied as one of:
g.1) An automatic advance needing no additional individual character positioning data, the advance being deductible from the position of the character reference point of the previous character and from the horizontal increment of the character in question;
g.2) An automatic advance with character position offset data, where for the horizontal as well as for the vertical position of the character a first value deduced from the position of the character reference point of the previous character and from the horizontal increment of the character in question is added with a second value which is individually described in the character positioning data;
g.3) Relative character positioning data applied relative to the character reference point of the previous character; g.4) Absolute character positioning data applied relative to the video image origin.

## Claims

1. Method for decoding items of subtitling data, **characterised by** the steps:
- retrieving (202) items of Character Referencing Data (103, 203) that are related to corresponding parts of a video or audio-visual data signal (101), which data items (103, 203) describe sequences of characters as well as information about where in pictures of said data signal and/or when and/or how to make the referenced characters visible using a display memory (207);
- deriving (206) from said items of Character Referencing Data (103, 203) items of Character Selecting Information and Character Positioning Information;
- reading (206) pixel data of said referenced characters as designated by said items of Character Selection Information from a font memory (208);
- writing (206) said pixel data into said display memory (207) as designated by said items of Character Positioning Information.

2. Method according to claim 1, wherein the following steps are carried out before retrieving (202) said items of Character Referencing Data (103, 203):
- retrieving (202) items of Font Describing Data (102, 204) related to corresponding ones of said items of Character Referencing Data (103, 203);
- writing (205) said items of Font Describing Data into said font memory (208).

3. Method according to claim 1 or 2, wherein, after retrieving said items of Character Referencing Data (103, 203), the following steps are carried out:
- checking whether or not said pixel data of said referenced characters are already stored in said font memory (208) ;
- if not true, retrieving (202) such items of Font Describing Data (102, 204) which contain said referenced characters;
- writing said items of Font Describing Data into said font memory (208).

4. Apparatus for decoding items of subtitling data, said apparatus including:
- means (202) for retrieving items of Character Referencing Data (103, 203) that are related to corresponding parts of a video or audio-visual data signal (101), which data items (103, 203) describe sequences of characters as well as information about where in pictures of said data signal and/or when and/or how to make the referenced characters visible using a display memory (207);
- means (206) for:
deriving from said items of Character Referencing Data (103, 203) items of Character Selecting Information and Character Positioning Information;
reading pixel data of said referenced characters as designated by said items of Character Selection Information from a font memory (208);
writing said pixel data into said display memory (207) as designated by said items of Character Positioning Information.

5. Apparatus according to claim 4, wherein said means (202) for retrieving, before retrieving said items of Character Referencing Data (103, 203), retrieve items of Font Describing Data (102, 204) related to corresponding ones of said items of Character Referencing Data (103, 203), said apparatus further including:
- means (205) for writing said items of Font Describing Data into said font memory (208).

6. Apparatus according to claim 4 or 5, further including means for checking, after retrieving said items of Character Referencing Data (103, 203), whether or not said pixel data of said referenced characters are already stored in said font memory (208), wherein, if not true, such items of Font Describing Data (102, 204) are retrieved that contain said referenced characters, and are written into said font memory (208).

7. Method for encoding subtitling data, **characterised by** the step:
- attaching to a video or audio-visual data signal (101) related subtitling data including items of Character Referencing Data (103, 203) and items of Font Describing Data (102, 204),
whereby said items of Character Referencing Data (103, 203) describe sequences of characters as well as information about where in pictures of said data signal and/or when and/or how to make the referenced characters visible using a display memory, said items of Character Referencing Data including items of Character Selecting Information and Character Positioning Information, wherein said items of Character Selection Information can be used in a subtitle decoder for reading pixel data of said referenced characters from a font memory and said items of Character Positioning Information can be used in said subtitle decoder for writing said pixel data into said display memory,
and whereby said items of Font Describing Data (102, 204) can be written in said subtitle decoder into said font memory for checking whether or not said pixel data of said referenced characters are already stored in said font memory and, if not true, retrieving such items of Font Describing Data (102, 204) which contain said referenced characters and writing said items of Font Describing Data into said font memory.

8. A data carrier containing a video or audio-visual data signal (101) and related subtitling data that are encoded using a method according to claim 7.
